# EUROPEAN PATENT APPLICATION

(11) **EP 1 681 488 A1**
(43) Date of publication of application: **19.07.2006**
(21) Application number: 06000591.5
(22) Date of filing: 12.01.2006
(51) Int. Cl.: F16D 65/12

(54) **Wheel assembly with a disc brake for vehicles**

(30) Priority: 12.01.2005 US 905600
(71) Applicant: ROBERT BOSCH CORPORATION, Broadview, IL 61055 (US)
(72) Inventor: Sadanowicz, David Thomas, Canton Michigan 48188 (US)
(74) Representative: Costello-Saile, Thomas Johannes

(57) **Abstract**

A corner assembly (10) for a vehicle having a wheel hub (12) and a rotor (20) wherein the rotor (20) may freely translate axially with respect to the wheel hub (12) during a brake application and as a result any vibrations created on the engagement of friction pads (50,50') with the rotor (20) are not introduced into a stationary support (14) by way of the wheel hub (12) nor sensed by a person in the vehicle.

## Description

This invention relates to a corner assembly for a vehicle including a wheel hub and a rotor wherein the rotor may freely translate axially with respect to the wheel hub during a brake application to reduce the transmission of any vibration created on the engagement of friction pads with the rotor into the wheel hub from being communicated into a stationary member and consequently be transmitted to an operator through a brake pedal or steering system.

### BACKGROUND OF THE INVENTION

In vehicles currently manufactured, it is not uncommon for disc brakes to be installed on all four corners of the vehicle wherein a rotor is rotated by a corresponding wheel on the vehicle. The wheel is mounted on a hub that is retained in a bearing that is fixed to a support member secured to the frame of the vehicle. A brake application is effected by moving first and second friction pads retained in a caliper member into engagement with opposing first and second surfaces on the rotor. In such disc brake systems, the first and second friction pads and the rotor are maintained in a perpendicular relationship otherwise during a revolution of rotation of a rotor. Should this perpendicular relationship be changed, during a brake application, engagement of the first and second friction pads with the rotor may create vibration and be sensed by an operator as a surging action on a brake pedal.

In an effort to maintain and sustain a perpendicular relationship between a wheel hub and brake components in a corner assembly, U.S. Patent 5,842,388 disclosed a process of conjugate machining a rotor and a wheel hub. In this process the rotor is placed on the wheel hub and clamped thereon by bolts through which a rim for a wheel is fixed to the wheel hub. This process produces a corner assembly that functions in an adequate manner as original equipment when installed in the manufacture of a new vehicle, however the time, effort and manufacturing such tolerances required to achieve such a desired relationship can add considerable cost to the manufacture of a corner assembly.

In an effort to reduce cost in the manufacture of a corner assembly and in particular machining, structure has been disclosed in U.S. Patent 6,145,632 whereby a rotor may be connected to a flange of a wheel bearing through a splined connection. In this corner assembly, the rim for a wheel is attached to the flange and the rotor clamped between the rim and the flange to align a rotor with respect to friction member in a caliper. While this splined connection may reduce the machining involved with respect to the wheel hub and rotor it does not change the way in which vibration caused by the engagement of friction pads with a rotor during a brake application is communicated into a fixed support for the wheel hub and eventually experienced by an operator as a surging action or movement on a brake pedal

### SUMMARY OF THE INVENTION

An advantage provided by the present invention of a corner assembly for a vehicle resides in the dampening of vibration created on engagement of a friction pad with a rotor by allowing a rotor to freely float on a wheel hub in the axial direction during a brake application such that the communication of vibration carried into a support member through a wheel hub is essentially eliminated and as a result the brake pedal remains free of any indication of an effect of such vibration.

The corner assembly is distinguished by a wheel hub that is connected to a stationary member through a wheel bearing, to a rotor through a splined connection and to a rim for a wheel through a bolts that extend through a flange on the wheel hub. The rotor is aligned between first and second friction members that are retained in a caliper of a brake such the when an input is supplied to an actuation piston an actuation force moves the first and second friction member are moved into engagement with the rotor to impede the rotation of the rotor during a brake application. The actuation reaction force is opposed by a reaction force and carried through the caliper into stationary member however any vibration created from the engagement of the first and second friction members with the rotor is not communicated into the stationary member as a result of the splined connection of the present invention. The splined connection includes a first plurality of axial slots that are located on a outer peripheral surface of the flange on the wheel hub that mesh with a corresponding second plurality of axial slots that are located on an inner peripheral surface of the rotor in a manner that allows the rotor to axially float on the wheel hub such that the rotor may freely move axially without transmitting such vibration into a stationary member during a brake application. The first plurality of slots on the wheel hub define a corresponding first plurality of teeth on the outer peripheral surface of the wheel hub wherein each tooth is characterized by a substantially flat surface that is located between a shoulder on a first radial face and an intersection for a entry surface that extends to a second radial face on the flange for the wheel hub. The second plurality of axial slots are located on an inner peripheral surface of an axial opening of the rotor to define a second plurality of teeth wherein each tooth is characterized by a substantially flat surface that extends from a third radial face to a fourth radial face on the inner peripheral surface of the rotor. The second plurality of teeth mesh with the first plurality of teeth whereby the flat surface on the first plurality of teeth such that the third radial face on the rotor engages the shoulder on the first plurality of teeth and the fourth radial face is aligned with the intersection of the entry surface and as a result a radial gap is created between the fourth radial face and a rim for the wheel of a vehicle that is fixed to the second radial face of the flange by bolts. The gap allows the rotor to independently axially translate in response to the vibrations and as a result vibration is not introduced into the stationary member by way of the wheel hub in a manner that is transmitted to or noticed by an operator.

An advantage of this invention resides in providing a corner assembly for a vehicle wherein a rotor is free to axially move on a wheel hub during a brake application such that any vibration created thought the engagement of friction members with a rotor is not transmitted to a stationary support and communicated or felt an operator.

A further advantage of this invention resides in an ability to manufacture a corner assembly wherein machining of a wheel hub is substantially reduced and/or eliminated with respect to alignment of a rotor and friction members retained in a caliper.

### BRIEF DESCRIPTION OF THE DRAWINGS

Figure 1 is a perspective sectional view of a portion of a corner assembly for a vehicle including the present invention;
Figure 2 is an exploded view of the wheel hub and rotor of Figure 1;
Figure 3 is an enlarged view of circumscribed area 3 of Figure 2;
Figure 4 is a sectional view of the corner assembly of Figure 1 with a rim for a wheel attached to the wheel hub;
Figure 5 is an enlarged view of the circumscribed area 5 of Figure 4; and
Figure 6 is an enlarged view of the circumscribed area 5 after a brake application.

### DETAILED DESCRIPTION OF THE INVENTION

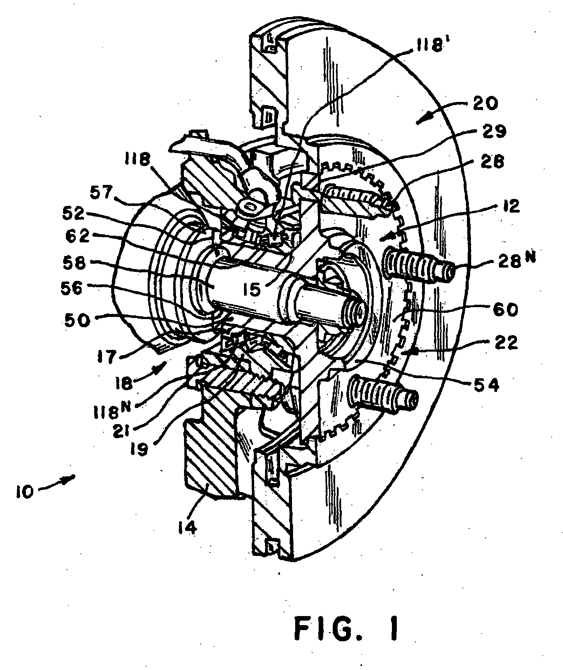

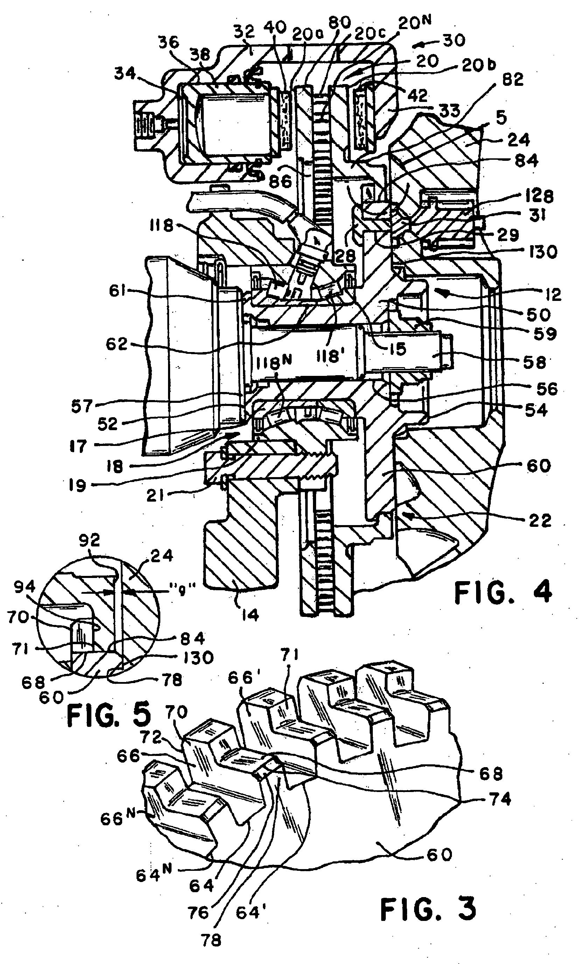

Figure 1 illustrates a portion of a corner assembly 10 for a vehicle including a wheel hub 12 that is connected to a stationary member 14 through a wheel bearing 18, to a rotor 20 through a splined connection 22 and to a rim 24 for a wheel, see Figure 4, through a plurality of bolts or mounting studs 28,28'···28ⁿ that extend through a flange 60 on the wheel hub 12.

The stationary member 14 for the corner assembly 10 may be a knuckle for a steering assembly of a type illustrated in U.S. Patent 6,829,825 in which a caliper 30 for a disc brake is aligned with the rotor 20 as shown in Figure 4. The caliper 30 has a housing 32 retained on the stationary member 14 with a chamber 34 defined in a bore 36 by a piston 38. A first friction member 40 is attached to the piston 38 and aligned with a first face 20a on rotor 20 while a second friction member 42 is aligned with a second face 20b on the rotor 20 by arm 33. In response to pressurized fluid being presented to chamber 34, the piston 38 moves the first friction member 40 toward face 20a while housing 32 expands to pull the second friction member 42 toward face 20b. On respective engagement of the first 40 and second 42 friction members with faces 20a and 20b, the rotation of rotor 20 is impeded to effect a brake application. When the first 40 and second 42 friction members engage the rotor 20 vibration may occur as the surfaces 20a and 20b on the rotor may not be in parallel alignment after an extended period of use due to uneven wear. The vibration of the rotor 20 in a solid connection would introduce an axial stress force into the wheel hub 12 and bearing 18, however, in the present invention any such stress force is attenuated as the rotor 20 is free to axially float by way of a splined connection 22 and as a result a smoother brake application is provided.

The wheel hub 12 has a cylindrical body 50 with a first end 52 and a second end 54 with a bore 56 that extends there through for receiving axle 58 and a flange 60 that is located on a peripheral surface 62, see Figures 1 and 4. The flange 60 on the peripheral surface 62 is defined by a first plurality of axial slots 64, 64'...64ⁿ, see Figure 3, to define a corresponding first plurality of projections or teeth 66, 66'...66ⁿ wherein each projection or tooth 66 has substantially flat surface 68 that is located between a shoulder 70 that extends from a first radial face 72 and an intersection 74 of a entry surface 76 that extends to a second radial face 78 on the flange 60. The plurality of bolts or mounting studs 28, 28'···28ⁿ extend through flange 60 such that when the wheel hub 12 is attached to axle 58 by a nut 59 and the first end 52 is held tight against shoulder 57 on axle 58 with the plurality of bolts or mounting studs 28, 28'···28ⁿ located in a radial arc of the axis of axle 58.

Bearing 18 includes a plurality of rollers 118,118'...118ⁿ with an inner race 17 that is retained on peripheral surface 62 of wheel hub 12. The inner race 17 for bearing 18 is retained on the peripheral surface 62 by rolling or deforming lip 61 against the inner race 17. The outer race 19 is fixed to the stationary member 14 by bolts 21 (only one is shown) such that the wheel hub 12 and axle 58 may freely rotate with respect to the stationary member 14.

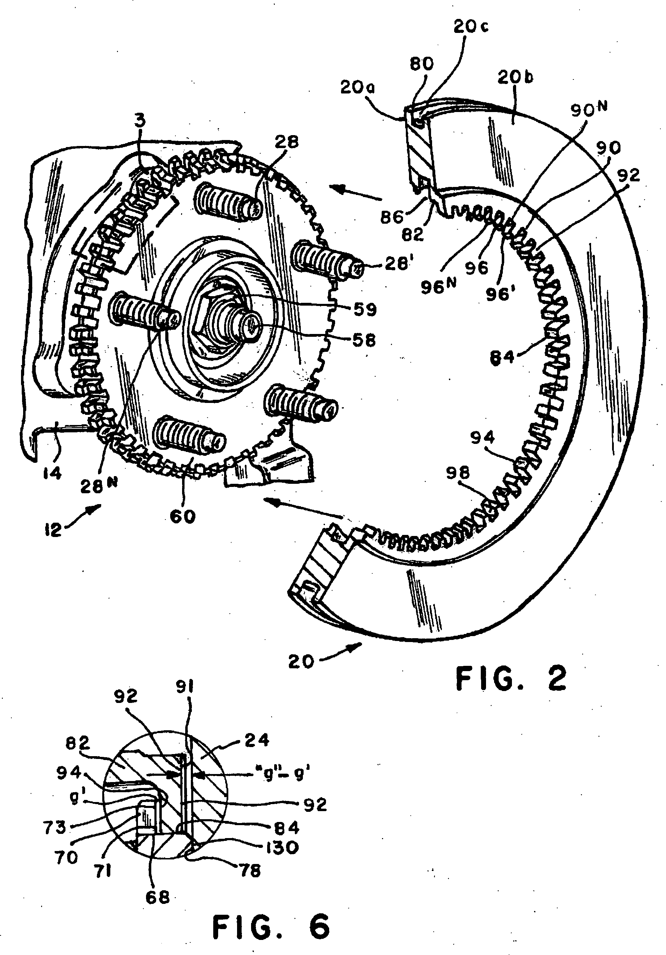

The rotor 20 is essentially a disc, see Figures 1, 2 and 4, with an outer peripheral surface 80 that is offset by a cylindrical body 82 from an inner peripheral surface 84. The outer peripheral surface 80 defines the limit for the first face 20a and the second face 20b that are separated from each other by a plurality of spacers 20c,20c'···20cⁿ. The spacers 20c,20c'···20cⁿ are located in a manner to define flow paths for air to flow between an inner surface 86 and the outer peripheral surface 80 and that assist in cooling the rotor 20 during a brake application. The inner peripheral surface 84 is defined by a central opening with a second plurality of axial slots 90, 90'···90ⁿ that extend from a first radial face 92 to a second radial face 94 to define a corresponding second plurality of projections or teeth 96, 96' ...96ⁿ wherein each projection or tooth 96 has substantially flat surface 98 that extends from radial face 92 to radial face 94.

### Method of Assembly

Mounting studs 28,28'···28ⁿ are located in corresponding openings 29 (only one is shown) in flange 60 of the wheel hub 12 and retained therein by keepers 31 (only one is shown), see Figure 4. Thereafter, a wheel bearing 18 is placed on peripheral surface 62 and end 61 on wheel hub 12 deformed to hold inner race 17 against shoulder 15 on peripheral surface 62. The wheel hub 12 is placed on axle 58 and nut 59 attached to the axle 58 and thereafter the outer race 19 is attached to the stationary member 14 by bolts 21 in a manner as illustrated in Figures 1, 2 and 4. The wheel hub 12 is distinguished by a cylindrical body with a peripheral flange 60 having a plurality or axial slots 64,64'...64", see Figure 3, that define a corresponding first plurality of teeth 66,66'...66ⁿ. Each tooth 66 of the first plurality of teeth 66, 66'...66" has substantially flat surface 68 that is located between a shoulder 70 that extends from a first radial face 72 to an intersection 74 of a entry surface 76 that extends from a second radial face 78 on the flange 60. Once the wheel hub 12 is attached to the stationary member 14, a rotor 20 is obtained from a source. The rotor 20 is distinguished by having an inner peripheral surface 84 with a central opening having a second plurality of axial slots 90,90'···90ⁿ located thereon that extend from a first radial face 92 to a second radial face 94 to define a corresponding second plurality of teeth 96,96'...96ⁿ. Each tooth 96 of the second plurality of teeth 96, 96'...96ⁿ. has substantially flat surface 98 that extends to a first radial face 92 to a second radial face 94. The rotor 20 is placed on flange 60 such that the first plurality of teeth 66, 66'...66" mesh with the second plurality of teeth 96, 96'...96" and the radial face 94 for each tooth 96 is located adjacent shoulder 70 for each tooth 66 while radial face 92 is initially located in a radial plane along the intersection 74 of each entry surface 76 and flat surface 78 to established a splined connection between the wheel hub 12 and rotor 20. The caliper 30 may next be attached to the fixed member 14 with the first 40 and second 42 friction members located and aligned with the rotor 20 as illustrated in Figure 4. Thereafter, a rim 24 for a wheel is aligned on the mounting studs 28, 28'···28ⁿ and nuts 128 (only one is shown) are attached thereto to being face 130 into engagement with flange 60, see Figures 4, 5 and 6 to fix the wheel to the wheel hub 12 such that a gap "g" is created between radial face 92 and rim 24 and as a result rotor 20 is free to float between face 71 on shoulder 70 and face 130 on rim 24.

### Mode of Operation

When an operator desires to effect a brake application, pressurized fluid is supplied to chamber 36 that acts on piston 38 to move the first friction member 40 toward and into engagement with face 20a on rotor and acts on housing 32 to move the second friction member 40 toward and into engagement with face 20b on rotor 20. Since the caliper 30 is fixed to the stationary member 14, engagement of the first 40 and second 42 friction members with the rotor 20 impedes the rotation of the rotor 20 to effect a brake application. With the engagement of the first 40 and second 42 friction members with the rotor 20 vibration may occur. The vibration forces and the resistance force opposing the actuation force created by the pressurized fluid in chamber 36 acting to move the first 40 and second 42 friction members are carried into the rotor 20. However, since the inner peripheral surface 84 on rotor 20 is free to translate axially on flat surface 78 on flange 60 an amount limited by gap "g" and as a result the vibrations forces are not carried into the wheel hub 12 where the vibration could be sensed by an operator.

An initial evaluation has been determined that an adequate size of gap "g" may be between 0.00 mm to 20.0 mm to achieve the advantages offered through this invention. After a brake application, radial face 94 on rotor 20 most likely will not engage face 71 and a result a portion of gap g would be shifted to a space located between face 71 and radial face 94 to define a second gap g' as illustrated in Figure 6 since rotor 20 may be centered anywhere between face 71 and a radial plane aligned with radial face 78 on flange 60. Should the vibration force develop into noise as the rotor 20 translated on the splined connection, a first insulator washer 73 could be placed adjacent face 71 and a second insulator washer 91 could be placed adjacent radial face 92 on rotor 20 to absorb noise that would not interfere with the free translation along the axis of the splined connection 22.

The splined connection 22 is shown as a first plurality of teeth 66, 66'...66ⁿ on wheel flange 60 mesh with a second plurality of teeth 96, 96'...96ⁿ on rotor 20, however, it is envisioned that the connection could be defined by a key-slot or other surface configuration wherein the resistance force may be transmitted into the support member 14 and yet free axial translation is not obstructed.

Further it has been determined that under certain operational conditions, it may be desirable to case harden the flange 60 of the wheel hub 12 to reduce any wear that may occur on the flat surfaces 78 and/or apply some type of oxidization protection as it is important that the rotor 20 is free to axially translate during a brake application to reduce the transmission of vibration into the fixed member 14 in accordance with this invention.

## Claims

1. A corner assembly (10) for a vehicle having a wheel hub (12) connected to a stationary member (14) through a bearing (18), to a rotor (20) through a splined connection (22) and to a rim (24) for a wheel through bolts (28,28'···28ⁿ) that extend through a flange (60) on the wheel hub (12), said rotor (20) being aligned between first (40) and second (42) friction members that are retained in a caliper (30) of a brake, said first (40) and second (42) friction members responding to an actuation force from a piston (38) of the caliper (30) by engaging said rotor (20) to impede the rotation thereof during a brake application, said actuation force being opposed by a reaction force carried through the caliper (30) to the stationary member (14) and as a result any vibration created by the engagement of the first (40) and second (42) friction members with the rotor (20) is communicated into said stationary member (14), the improvement residing in said splined connection (22) that includes a first plurality of axial slots (64,64'···64ⁿ) that are located on a outer peripheral surface (62) of said flange (60) on said wheel hub (12) to define a corresponding first plurality of teeth (66,66'···66ⁿ) on said outer peripheral surface (62) wherein each tooth of said first plurality of teeth (66,66'···66ⁿ) is **characterized by** a substantially flat surface (68) that is located between a shoulder (70) located adjacent a first radial face (72) and an intersection (74) for a entry surface (76) that extends from a second radial face (78) on said flange (60); and in said rotor (20) that includes a second plurality of axial slots (90,90'···90ⁿ) located on an inner peripheral surface (84) of an axial opening of said rotor (20) to define a second plurality of teeth (96,96'···96ⁿ) on said inner peripheral surface (84) of said rotor (20) wherein each tooth of said second plurality of teeth (96,96'···96ⁿ) is **characterized by** a substantially flat surface (98) that extends from a third radial face (92) on said inner peripheral surface (84) to a fourth radial face (94) of said rotor (20), said second plurality of teeth (96,96'···96ⁿ) meshing with said first plurality of teeth (66,66'···66ⁿ) by being located on said flat surface (68) on said first plurality of teeth (66,66'···66ⁿ) such that said third radial face (92) of said rotor (20) engages said shoulder (70) on said first plurality of teeth (66,66'···66ⁿ) and said fourth radial face (94) is aligned with said intersection (74) of said entry surface (76) such that a radial gap (g) is created between said fourth radial face (94) with said rim (24) fixed to said flange (60) by said bolts (28,28'···28ⁿ), said gap (g) allowing said rotor (20) to freely translate axially in response to said any vibration without such vibration being introduced into said stationary member (14) by way of said wheel hub (12).

2. The corner assembly (10) as recited in claim 1 wherein said gap (g) is between 0.00 mm and 20 mm.

3. The corner assembly (10) as recited in claim 1 wherein said first (66,66'···66ⁿ) and second (96,96'···96ⁿ) plurality of teeth are case hardened such that wear does not occur in a manner that prevents axial translation.

4. The corner assembly (10) as recited in claim 1 wherein said first (66,66'···66ⁿ) and second (96,96'···96ⁿ) teeth are coated to prevent oxidation.

5. The corner assembly (10) as recited in claim 1 wherein said bolts (28,28'···28ⁿ) directly attached the rim (24) to said wheel hub (12) without placing any clamping force on said rotor (20).

6. A corner assembly (10) for a vehicle including a rotor (20) that is connected to a wheel hub (12) through a splined connection (22) **characterized in that** the rotor (20) may freely axially move with respect to the wheel hub (12) during a brake application and as a result any vibrations created on the engagement of friction pads (40,42) with the rotor (20) is not introduced into a stationary support (14) by way of the wheel hub (12) nor felt by a person in the vehicle.

7. The corner assembly (10) as recited in claim 6 wherein said splined connection (22) includes a first plurality of axial slots (64,64'···64ⁿ) that are located on a outer peripheral surface (62) on a flange (60) of said wheel hub (12) to define a corresponding first plurality of teeth (66,66'···66ⁿ) wherein each tooth of said first plurality of teeth (66,66'···66ⁿ) is **characterized by** a substantially flat surface (68) that is located between a shoulder (70) located adjacent a first radial face (72) and an intersection (74) for a entry surface (76) that extends to a second radial face (78) of said flange (60); and in that said rotor (20) includes a second plurality of axial slots (90,90'···90ⁿ) located on an inner peripheral surface (84) of an axial opening of said rotor (20) to define a second plurality of teeth (96,96'···96ⁿ) on said inner peripheral surface (84) of said rotor (20) wherein each tooth of said second plurality of teeth (96,96'···96ⁿ) is **characterized by** a substantially flat surface (98) that extends from a third radial face (92) on said inner peripheral surface (84) to a fourth radial face (94) of said rotor (20), said second plurality of teeth (96,96'···96ⁿ) meshing with said first plurality of teeth (66,66'···66ⁿ) by being located on said flat surface (68) on said first plurality of teeth (66,66'···66ⁿ) such that said third radial face (92) of said rotor (20) engages said shoulder (70) on said first plurality of teeth (66,66'···66ⁿ) and said fourth radial face (94) is aligned with said intersection (74) of said entry surface (76) such that a radial gap (g) is created between said fourth radial face (94) when a rim (24) fixed to said flange (60) by bolts (28,28'···28ⁿ), said gap (g) allowing said rotor (20) to axially translate in response to said any vibration without such vibration being introduced into said stationary support by way of said wheel hub (12).

8. The corner assembly (10) as recited in claim 1 further including a first insulator (73) located between said shoulder (70) and said rotor (20) to absorb any noise created as a result of transudation of said rotor (20) corresponding to vibration.

9. The corner assembly (10) as recited in claim 8 further including a second insulator (91) located between said rotor (20) and said rim (24) to absorb any noise created as a result of translation of said rotor (20) corresponding to vibration.

10. A corner assembly (10) for a vehicle having a wheel hub (12) connected to a stationary member (14) through a bearing (18), to a rotor (20) through a splined connection (22) and to a rim (24) for a wheel through bolts (28,28'···28ⁿ) that extend through a flange (60) on the wheel hub (12), said rotor (20) being aligned between first (40) and second (42) friction members that are retained in a caliper (30) of a brake, said first (40) and second (42) friction members responding to an actuation force from a piston (38) in a caliper (30) by engaging said rotor (20) to impede the rotation thereof during a brake application, said actuation force being opposed by a reaction force carried through the caliper (30) to the stationary member (14) and as a result any vibration created by the engagement of the first (40) and second (42) friction members with the rotor (20) is communicated into said stationary member (14), the improvement residing in said splined connection (22) that includes a first plurality of axial slots (64,64'···64ⁿ) that are located on a outer peripheral surface (62) of said flange (60) on said wheel hub (12) to define a corresponding first plurality of projections (66,66'···66ⁿ) on said outer peripheral surface (62) wherein each projection of said first plurality of projections (66,66'···66ⁿ) is **characterized by** a substantially flat surface (68) that is located between a shoulder (70) located adjacent a first radial face (72) and an intersection (74) for a entry surface (76) that extends from a second radial face (78) on said flange (60); and in that said rotor (20) includes a second plurality of axial slots (90,90'···90ⁿ) located on an inner peripheral surface (84) of an axial opening of said rotor (20) to define a second plurality of projections (96,96'···96ⁿ) on said inner peripheral surface (84) of said rotor (20) wherein each projection of said second plurality of projections (96,96'···96ⁿ) is **characterized by** a substantially flat surface (98) that extends from a third radial face (92) on said inner peripheral surface (84) to a fourth radial face (94) of said rotor (20), said second plurality of projections (96,96'···96ⁿ) meshing with said first plurality of projections (66,66'···66ⁿ) by being located on said flat surface (68) on said first plurality of projections (66,66'···66ⁿ) such that said third radial face (92) of said rotor (20) engages said shoulder (70) on said first plurality of projections (66,66'···66ⁿ) and a radial gap (g) is created between said fourth radial face (94) and a face on said rim (24) when said rim (24) is fixed to said flange (60) by said bolts (28,28'···28ⁿ), said gap (g) allowing said rotor (20) to freely translate axially in response to said any vibration without such vibration being introduced into said stationary member (14) by way of said wheel hub (12).

11. A corner assembly (10) for a vehicle having a wheel hub (12) connected to a stationary member (14) through a bearing (18), to a rotor (20) through a connection arrangement and to a rim (24) for a wheel through bolts (28,28'···28ⁿ) that extend through a flange (60) on the wheel hub (12), said rotor (20) being aligned between first (40) and second (42) friction members that are retained in a caliper (30) of a brake, said first (40) and second (42) friction members responding to an actuation force from a piston (38) of the caliper (30) by engaging said rotor (20) to impede the rotation thereof during a brake application, said actuation force being opposed by a reaction force carried through the caliper (30) to the stationary member (14) and as a result any vibration created by the engagement of the first (40) and second (42) friction members with the rotor (20) are communicated into said stationary member (14), the improvement residing in said connection arrangement that includes an outer peripheral surface (62) located of said flange (60) on said wheel hub (12) to define a first irregular surface (66,66'···66ⁿ) with a substantially flat surface (68) that is located between a shoulder (70) located adjacent a first radial face (72) and an entry surface (75) that extends from a second radial face (74) on said flange (60); and in said rotor (20) that includes an inner peripheral surface (84) to define a second irregular surface (96,96'···96ⁿ) with a substantially flat surface (98) that extends from a third radial face (92) on said inner peripheral surface to a fourth radial face (94) of said rotor (20), said second irregular surface (96,96'···96ⁿ) being meshing with said first irregular surface (66,66'···66ⁿ) by being located on said flat surface (68) on said outer peripheral surface (62) with said third radial face (92) of said rotor (20) engaging said shoulder (70) on said flange (60) such that a radial gap (g) is created between said fourth radial face (94) and a face (130) on said rim (24) when said rim (24) is fixed to said flange (60) by said bolts (28,28'···28ⁿ), said gap (g) allowing said rotor (20) to freely translate axially in response to said any vibration without such vibration being introduced into said stationary member (14) by way of said wheel hub (12).
